# EUROPEAN PATENT APPLICATION

(11) **EP 4 715 980 A1**
(43) Date of publication of application: **25.03.2026**
(21) Application number: 25183266.3
(22) Date of filing: 17.06.2025
(51) Int. Cl.: H01M 50/207, H01M 50/242, H01M 50/244, H01M 50/264, H01M 50/291

(54) **BATTERY PACK**

(30) Priority: 20.09.2024 CN 202422310976 U; 12.12.2024 WO PCT/CN2024/138919
(71) Applicant: Eve Energy Co., Ltd., Huizhou, Guangdong 516006 (CN)
(72) Inventor: WEN, Shengde, Huizhou, Guangdong 516006 (CN)
(74) Representative: Studio Torta S.p.A.

(57) **Abstract**

The application discloses a battery pack, including: a casing body, including a casing shell and a casing cover, wherein the casing shell forms a accommodating cavity, and the casing cover and the casing shell are connected with each other so that the casing cover closes the accommodating cavity; a plurality of battery cells, arranged inside the accommodation cavity; a plurality of pressure strips, arranged between the casing cover and the battery cells; a first adhesive; and a second adhesive; wherein the first adhesive is arranged between the casing cover and the plurality of pressure strips to connect the casing cover with the plurality of pressure strips, and the second adhesive is arranged between the plurality of pressure strips and the plurality of battery cells to connect the plurality of pressure strips with the plurality of battery cells.

## Description

### TECHNICAL FIELD

The present application relates to the technical field of battery, and in particular to a battery pack.

### BACKGROUND

A battery pack is usually composed of battery cells, pressure strips and casing structure to ensure the stability and safety of the battery. The design of traditional battery packs mainly focuses on the arrangement and connection of battery cells, while the design of pressure strips and casing structure often lacks sufficient optimization.

### SUMMARY

In terms of casing structure, a comprehensive consideration of heat dissipation inside the battery pack and external impact protection is usually ignored in traditional designs, which affects the service life and safety of the battery pack. Therefore, improving the pressure strips and casing structure of the battery pack and optimizing its stability have important technical significance and practical application value.

The present application provides a battery pack, including: a casing body, including a casing shell and a casing cover, the casing shell forming an accommodating cavity, where the casing cover and the casing shell are connected so that the casing cover closes the accommodating cavity; a plurality of battery cells, arranged inside the accommodating cavity; a plurality of pressure strips, arranged between the casing cover and the battery cells; adhesive members, including a first adhesive and a second adhesive, where the first adhesive is arranged between the casing cover and the pressure strips to connect the casing cover and the pressure strips, and the second adhesive is arranged between the pressure strips and the battery cells to connect the pressure strips and the battery cells.

### BRIEF DESCRIPTION OF THE DRAWINGS

FIG. 1 is an exploded view of the structure of a battery pack according to an embodiment of the present application.
FIG. 2 is a front view of a battery pack according to an embodiment of the present application.
FIG. 3 is a schematic diagram showing a partial structure of an anti-slip structure according to an embodiment of the present application.
FIG. 4 is a cross-sectional view along B-B in FIG. 2 according to an embodiment of the present application.
FIG. 5 is an enlarged view of the partial structure in area B of FIG. 4 according to an embodiment of the present application.
FIG. 6 is a cross-sectional view along A-A in FIG. 2 according to an embodiment of the present application.
FIG. 7 is an enlarged view of the partial structure in area A of FIG. 6 according to an embodiment of the present application.

### List of Reference Numerals:

20, casing body; 201, casing shell; 2011, accommodating cavity; 2012, installation space; 202, casing cover; 203, reinforcement member; 30, pressure strip; 301, first adhesive storage recess; 302, clearance slot; 303, through hole; 304, second adhesive storage recess; 40, adhesive member; 401, first adhesive; 402, second adhesive; 50, gap adjustment assembly; 501, bolt; 5011, skirt; 502, screw sleeve; 5021, threaded part; 50211, anti-slip structure; 50212, threaded structure; 50213, avoidance recess; 5022, limiting part; 60, battery cell.

### DETAILED DESCRIPTION OF THE EMBODIMENTS

Embodiments of the present application provides beneficial effects as follows: the battery pack includes a casing body, a plurality of battery cells, a plurality of pressure strips, and a plurality of adhesive members arranged in positional correspondence with the pressure strips. The casing body includes a casing shell and a casing cover connected to each other. The casing shell forms an accommodating cavity. The casing cover and the casing shell are fixedly connected to each other so that the casing cover closes the accommodating cavity. The battery cells are placed inside the accommodating cavity and fixedly abut against the inner walls of the accommodating cavity. The plurality of pressure strips are arranged at intervals between the casing cover and the battery cell, and both ends of each pressure strip are connected to the casing shell. The adhesive members include a first adhesive and a second adhesive. A side surface of the pressure strips closer to the casing cover is bonded to the first adhesive, and a side surface of the first adhesive farther from the pressure strips is bonded to the casing cover; a side surface of the pressure strips closer to the battery cells is bonded to the second adhesive, and a side surface of the second adhesive farther from the pressure strips is bonded to the plurality of battery cells. The pressure strips are fixedly connected to the casing cover by the first adhesive, and are fixedly connected to the plurality of battery cells by the second adhesive, so that the casing cover, the plurality of pressure strips and the plurality of battery cells are integrated as a whole, which enhances the connection strength between the parts, improves the displacement of the battery cells caused by vibration, thermal expansion or impact, thereby improving the overall structural strength and stability of the battery pack, and improving the utilization rate of the pressure strips.

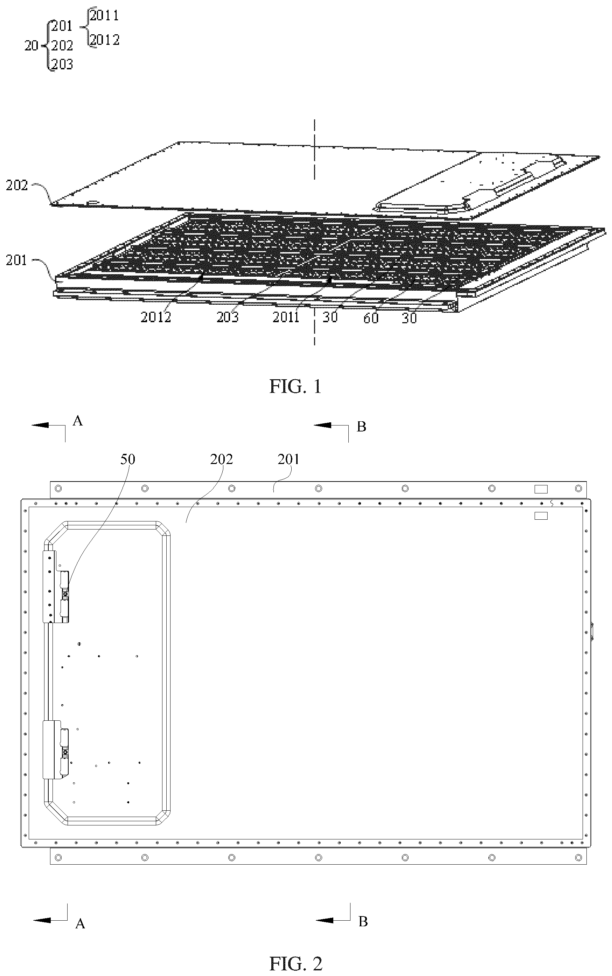

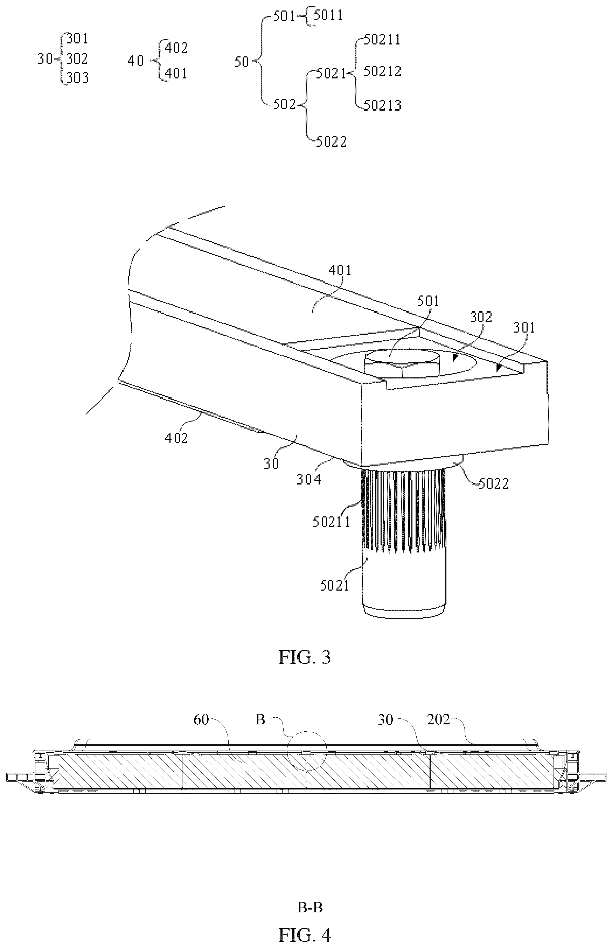

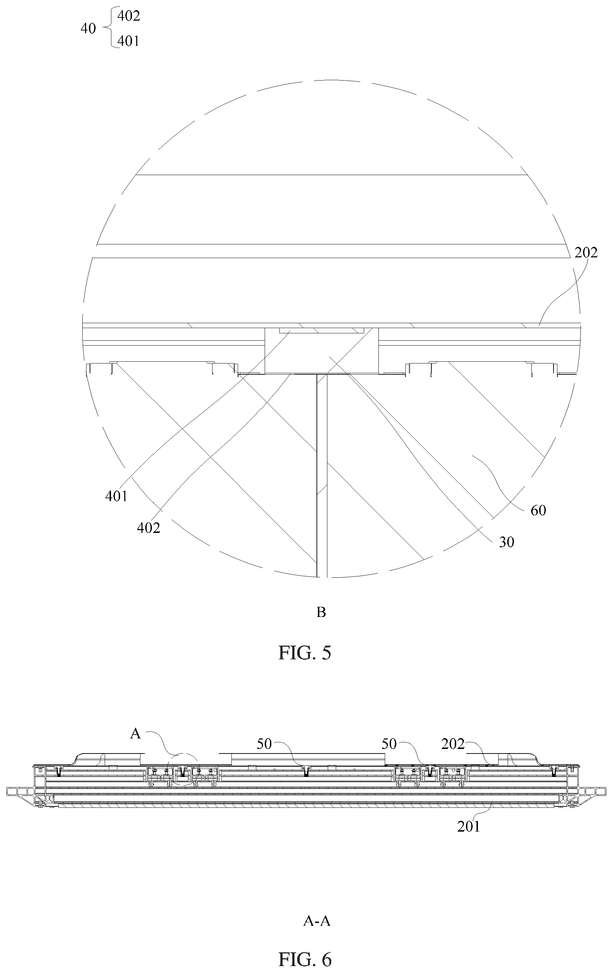

Please refer to FIGs. 1 to 5. FIG. 1 is an exploded view of the structure of a battery pack according to an embodiment of the present application. FIG. 2 is a front view of a battery pack according to an embodiment of the present application. FIG. 3 is a schematic diagram showing a partial structure of an anti-slip structure according to an embodiment of the present application. FIG. 4 is a cross-sectional view along B-B in FIG. 2 according to an embodiment of the present application. FIG. 5 is an enlarged view of the partial structure in area B of FIG. 4 according to an embodiment of the present application.

An embodiment of the present application provides a battery pack, including a casing body 20, a plurality of battery cells 60, a plurality of pressure strips 30, and a plurality of adhesive members 40 arranged in positional correspondence with the pressure strips 30. The casing body 20 includes a casing shell 201 and a casing cover 202 connected to each other, and the casing shell 201 and the casing cover 202 may be fixed by bolts, rivets, welding, bonding or other methods. The casing shell 201 forms an accommodating cavity 2011. The casing cover 202 and the casing shell 201 are fixedly connected to each other so that the casing cover 202 closes the accommodating cavity 2011. The battery cells 60 are placed inside the accommodating cavity 2011 and fixedly abutted against the inner walls of the accommodating cavity 2011. The plurality of pressure strips 30 are arranged at intervals between the casing cover 202 and the battery cells 60, and both ends of each pressure strip 30 are connected to the casing shell 201.

Specifically, the adhesive members 40 include a first adhesive 401 and a second adhesive 402. The material of the first adhesive 401 may be silicone, butyl glue, epoxy resin, polyurethane glue, or polyimide glue. The material of the second adhesive 402 may be silicone, butyl glue, epoxy resin, polyurethane glue, or polyimide glue. A side surface of each pressure strip 30 closer to the casing cover 202 is bonded to the first adhesive 401, and a side surface of the first adhesive 401 farther from the pressure strip 30 is bonded to the casing cover 202; a side surface of the pressure strip 30 closer to the battery cells 60 is bonded to the second adhesive 402, and a side surface of the second adhesive 402 farther from the pressure strip 30 is bonded to the plurality of battery cells 60.

In actual applications, during the assembly of the battery pack, the battery cells 60 are first placed inside the accommodating cavity 2011, and then the pressure strips 30 are fixedly connected to the casing cover 202 by the first adhesive 401, and are fixedly connected to the plurality of battery cells 60 by the second adhesive 402, so that the casing cover 202, the plurality of pressure strips 30 and the plurality of battery cells 60 are integrated as a whole, which enhances the connection strength between the parts, improves the displacement of the battery cells caused by vibration, thermal expansion or impact, thereby improving the overall structural strength and stability of the battery pack, and improving the utilization rate of the pressure strips 30.

Optionally, referring to FIGs. 3 and 5, a first adhesive storage recess 301 is formed on a side surface of the pressure strip 30 facing the casing cover 202, and the first adhesive 401 is disposed in the first adhesive storage recess 301. Optionally, while the pressure strip 30 has the first adhesive storage recess 301, a second adhesive storage recess 304 is formed on a side surface of the pressure strip 30 facing the battery cells 60, and the second adhesive 402 is disposed in the second adhesive storage recess; or the pressure strip 30 only has the second adhesive storage recess at a side surface facing the battery cells 60.

In actual applications, in the process of applying adhesive to the side of the pressure strip 30 facing the casing cover 202 to form the first adhesive 401, the first adhesive storage recess 301 provides a space for accommodating unsolidified adhesive between the pressure strip 30 and the casing cover 202, thereby limiting the flow range of the unsolidified adhesive and reducing the risk of the unsolidified adhesive overflowing the pressure strip 30, and ensuring that the side surfaces of the first adhesive 401 formed after the adhesive solidifies fit with the inner walls of the first adhesive storage recess 301 and the inner wall of the casing cover 202 respectively, and that the first adhesive 401 is evenly distributed at specific positions between the pressure strip 30 and the casing cover 202, and between the pressure strip 30 and the battery cells 60. Therefore, the stability of the connection between the pressure strip 30 and the casing cover 202 is improved due to the reasonable storage and distribution of the adhesive. Similarly, when adhesive is applied to the side of the pressure strip 30 facing the battery cells 60, the second adhesive storage recess can limit the flow range of the unsolidified adhesive, reduce the risk of the unsolidified adhesive overflowing the pressure strip, and ensure that the side surfaces of the second adhesive 402 formed after the adhesive solidifies fit with the inner walls of the second adhesive storage recess and the upper part of the battery cells 60 respectively, thereby improving the stability of the connection between the pressure strip 30 and the battery cells 60.

Optionally, referring to FIG. 3, the first adhesive storage recess 301 extends along the length direction of the pressure strip 30, and the first adhesive storage recess 301 continuously extends through the corresponding surface of the pressure strip 30. Optionally, in the condition that the pressure strip 30 has the second adhesive storage recess, the second adhesive storage recess extends along the length direction of the pressure strip 30, and the second adhesive storage recess continuously extends through the corresponding surface of the pressure strip 30.

In actual applications, in the process of applying adhesive to the side of the pressure strip 30 facing the casing cover 202 to form the first adhesive 401, since the first adhesive storage recess 301 continuously extends through the corresponding surface of the pressure strip 30, the adhesive flows along the length direction of the first adhesive storage recess 301 until the first adhesive storage recess 301 is fully filled. This reduces the risk of the adhesive accumulating in one place which may cause overflows, improving the continuity and uniformity of the first adhesive 401 formed by the solidification of the adhesive, further enhancing the connection strength between the pressure strip 30 and the casing cover 202, and thus improving the overall structural strength and stability of the battery pack. Similarly, in the process of applying adhesive to the side of the pressure strip 30 facing the battery cells 60 to form the second adhesive 402, the second adhesive storage recess can improve the continuity and uniformity of the second adhesive formed by the solidification of the adhesive, and further enhance the connection strength between the pressure strip 30 and the battery cells 60.

In an embodiment, referring to FIGs. 1 and 2, the casing body 20 includes a plurality of reinforcement members 203, for example reinforcement beams, arranged at intervals in the accommodating cavity 2011. Both ends of each reinforcement member 203 are connected to the casing shell 201, and the reinforcement members 203 and the casing shell 201 can be fixed by bolts, rivets, welding, bonding, etc. The pressure strips 30 are arranged in a direction perpendicular to the extension direction of the plurality of reinforcement members 203, and the pressure strips 30 are connected to the reinforcement members.

Specifically, the battery pack further includes gap adjustment assemblies 50, each connected to the corresponding pressure strip 30 and the corresponding reinforcement member 203. The gap adjustment assemblies 50 are used to adjust the distance between the pressure strips 30 and the battery cells 60.

In actual applications, when the casing shell 201 is hit by external force, the reinforcement members 203 allows the force to be transmitted and decomposed in multiple directions, thereby reducing the stress concentration caused by uneven force on the casing shell 201, which may result in local deformation or damage, and thus improving the overall strength of the casing shell 201. When producing battery cells 60 with a different size from the ones previously produced, the gap adjustment assembly 50 allows the adjustment on the positions of the pressure strips 30 according to the size of the battery cells 60, thereby changing the spacing between the pressure strips 30 and the battery cells 60, and adjusting the thickness of the second adhesive 402. This design meets the fixing requirements of battery cells 60 of different sizes, and improves the versatility and flexibility of the battery pack.

In an embodiment, referring to FIGs. 2, 6 and 7, a plurality of gap adjustment assemblies 50 are arranged at intervals along the length direction of the pressure strip 30. Each gap adjustment assembly 50 includes a bolt 501 and a screw sleeve 502, and the screw sleeve 502 includes a threaded part 5021 and a limiting part 5022 that are coaxially arranged and fixedly connected. The threaded part 5021 is embedded in the corresponding reinforcement member 203. The threaded part 5021 may be implemented as a cylindrical shell or a multi-prism shell. The limiting part 5022 protrudes from the casing shell 201 and is arranged between the pressure strip 30 and the reinforcement member 203. The limiting part 5022 may have a ring shape or a polygonal shape. The bolt 501 penetrates the pressure strip 30 and is threadedly connected with the threaded part 5021.

In actual applications, when assembling the battery pack, the plurality of battery cells 60 are placed in the accommodating cavity 2011, then the pressure strips 30 are placed on the casing shell 201 so as to be in positional correspondence to the screw sleeve 502, and then the bolt 501 is inserted through the pressure strip 30 to be threadedly matched with the threaded part 5021 of the screw sleeve 502 until the side surface of the pressure strip 30 closer to the battery cell 60 abuts against the limiting part 5022. At this time, the distance between the pressure strip 30 and the battery cells 60 is the thickness of the limiting part 5022 minus the height of the portion of the battery cells 60 protruding the threaded part 5021. Therefore, the distance between the pressure strip 30 and the battery cells 60 can be adjusted by replacing the limiting part 5022 of different thicknesses. The bolt 501 and the threaded part 5021 cooperate to achieve precise control of the distance between the pressure strip 30 and the battery cells 60, which is convenient for assembly. When the plurality of pressure strips 30 are installed, adhesive is applied into the pressure strip 30 from both sides thereof to form the first adhesive 401 and the second adhesive 402, and the casing cover 202 and the casing shell 201 are connected, so that the side surface of the pressure strip 30 closer to the casing cover 202 is fixedly connected to the casing cover 202 by the first adhesive 401, and the side surface of the pressure strip 30 closer to the battery cells 60 is fixedly connected to the plurality of battery cells 60 by the second adhesive 402.

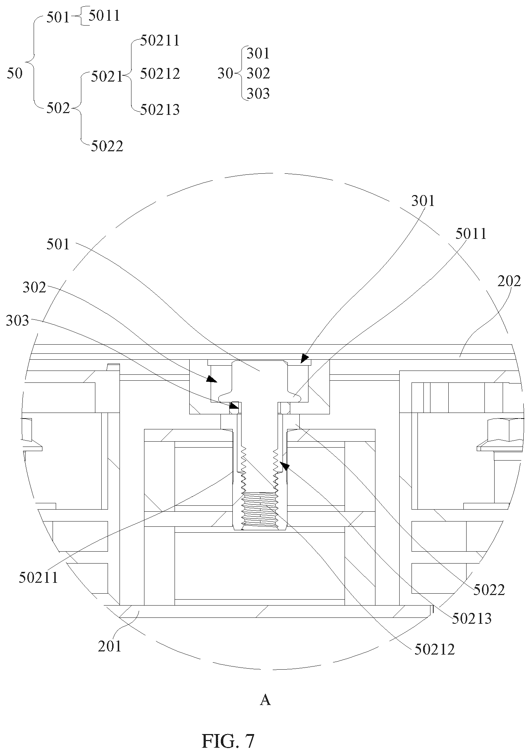

In an embodiment, referring to FIG. 7, a first avoidance recess 50213 is formed at an end of the threaded part 5021 closer to the pressure strip 30, and a threaded structure 50212 matched with the bolt 501 is provided at an end of the threaded part 5021 farther from the pressure strip 30. The bolt 501 is arranged apart from the wall of the avoidance recess 50213.

In actual applications, the bolt 501 is connected to the threaded part 5021 by the threaded structure 50212. In the process of applying adhesive, the adhesive may flow or overflow into the connection area between the threaded structure 50212 and the bolt 501, causing the threaded part 5021 and the threads of the bolt 501 to be bonded and cured, making it impossible to smoothly remove the pressure strip 30 from the casing shell 201, thereby affecting the subsequent maintenance or replacement of the battery cells 60. To avoid such a situation, the avoidance recess 50213 can effectively store part of the adhesive when the adhesive overflows, thereby reducing the possibility of the adhesive entering the connection between the threaded structure 50212 and the bolt 501. By properly design the avoidance recess 50213, the risk of the threaded part 5021 and the bolt 501 being unable to be disassembled due to adhesion can be significantly reduced, thereby ensuring the convenience and reliability of the battery pack during maintenance or replacement.

In an embodiment, referring to FIGs 3 and 7, the outer wall of the threaded part 5021 is provided with an anti-slip structure 50211 which is implemented as a plurality of protrusions surrounding the threaded part 5021 and arranged at intervals. The protrusions may have a strip-shape and are arranged along the axial direction of the threaded part 5021. The anti-slip structure 50211 is embedded in the reinforcement member 203 and fixedly connected to the reinforcement member 203.

In actual applications, when the bolt 501 and the threaded part 5021 are engaged, it may happen that after the bolt 501 and the threaded part 5021 are in place, the bolt 501 continues to rotate. At this time, there may be a risk that the bolt 501 drives the screw sleeve 502 to rotate relative to the reinforcement member 203 due to the threaded part 5021, resulting in the risk of failure of the screw sleeve 502. The anti-slip structure 50211 is therefore provided on the outer wall of the threaded part 5021. Since the anti-slip structure 50211 is implemented as protrusions and is embedded in the reinforcement member 203, when the screw sleeve 502 has a tendency to rotate, the anti-slip structure 50211 clamps the screw sleeve 502, making it difficult for the screw sleeve 502 to rotate, thereby effectively preventing the screw sleeve 502 from rotating or loosening during operation. The anti-slip design enhances the fixing effect of the screw sleeve 502, thereby ensuring that the connection between the reinforcement member 203 and the pressure strip 30 is more firm and reliable, further improving the overall structural strength and stability of the battery pack, and ensuring the safety and durability of the battery pack during long-term use.

In an embodiment, referring to FIGs 3 and 7, a plurality of clearance slots 302 are formed on a side surface of the pressure strip 30 away from the battery cells 60, and the clearance slots 302 are arranged in a one-to-one correspondence with the threaded sleeves 502. When the bolt 501 is threadedly engaged with the threaded part 5021, an end of the bolt 501 farther from the threaded part 5021 is located inside the clearance slot 302.

In actual applications, after the bolt 501 and the screw sleeve 502 are in place, the end of the bolt 501 farther from the threaded part 5021 is completely located inside the clearance slot 302, effectively avoiding direct friction or interference between the bolt 501 and the casing cover 202, while ensuring that the structure of the battery pack is more compact. Due to this design optimization, the space occupied by the battery pack is reduced, the rationality and compactness of the overall layout are improved, and it is helpful to achieve more efficient component arrangement and installation in a limited space.

In an embodiment, referring to FIG. 7, a through hole 303 is formed in the pressure strip 30. The through hole 303 is in communication with the clearance slot 302. The bolt 501 is passed through the through hole 303. A skirt 5011 is fixedly connected to the outer wall of the bolt 501. The skirt 5011 is annular. The skirt 5011 has a diameter larger than the head of the bolt 501, and covers the through hole 303. When the bolt 501 and the screw sleeve 502 are in place, the skirt 5022 seals the through hole 303.

In actual applications, when applying adhesive, the adhesive may flow or overflow into the through hole 303. At this time, since the diameter of the skirt 5011 is larger than the head of the bolt 501 and the skirt 5011 covers the through hole 303, the adhesive is blocked by the skirt 5011 and is not easy to pass through the through hole 303 into the connection area between the threaded part 5021 and the bolt 501, thereby reducing the accumulation of adhesive between the threads and avoiding the problem of difficult disassembly caused by the threads being bonded by the adhesive. This structural design reduces the risk of not being able to smoothly remove the bolt 501 during maintenance or replacement, and improves the convenience and reliability of the battery pack in subsequent operations.

In an embodiment, referring to FIG. 1, a plurality of reinforcement members 203 are arranged parallel to each other, and the plurality of reinforcement members 203 divide the accommodating cavity 2011 into a plurality of installation spaces 2012 arranged in parallel, and the plurality of installation spaces 2012 are arranged along a direction perpendicular to the extension direction of the plurality of reinforcement members 203. The pressure strips 30 and the reinforcement members 203 are arranged perpendicular to each other. The middle part of each pressure strip 30 is connected to the reinforcement members 203 by the cooperation of bolts 501 and screw sleeves 502, and both ends of the pressure strip 30 are respectively connected to the two reinforcement members 203 with the largest spacing by the cooperation of bolts 501 and screw sleeves 502.

In actual applications, when placing battery cells 60 into the installation spaces 2012, compared with the installation space arranged in a rectangular array, the design of parallel installation spaces 2012 reduces the number of times the accommodating cavity 2011 is split, thereby increasing the size of a single installation space 2012, so that battery cells 60 with larger sizes and fewer numbers can be received in the installation spaces 2012, thereby effectively saving the time required for packing the battery cells 60 and improving production efficiency.

## Claims

1. A battery pack, **characterized by** comprising:
a casing body (20), comprising a casing shell (201) and a casing cover (202), wherein the casing shell (201) forms an accommodating cavity (2011), and the casing cover (202) and the casing shell (201) are connected with each other so that the casing cover closes the accommodating cavity (2011);
a plurality of battery cells (60), arranged inside the accommodation cavity (2011);
a plurality of pressure strips (30), arranged between the casing cover (202) and the battery cells (60);
a first adhesive (401); and
a second adhesive (402);
wherein the first adhesive (401) is arranged between the casing cover (202) and the plurality of pressure strips (30) to connect the casing cover (202) with the plurality of pressure strips (30), and the second adhesive (402) is arranged between the plurality of pressure strips (30) and the plurality of battery cells (60) to connect the plurality of pressure strips (30) with the plurality of battery cells (60).

2. The battery pack according to claim 1, **characterized in that** the casing shell (201) and the casing cover (202) are connected with each other by threaded connection, riveting, welding or bonding.

3. The battery pack according to claim 1, **characterized in that** a first adhesive storage recess (301) configured to receive the first adhesive (401) is formed on a side surface of at least one of the plurality of pressure strips (30) facing the casing cover (202);
optionally, wherein the first adhesive storage recess (301) on each of the at least one pressure strip extends through the side surface of the pressure strip (30) along a length direction thereof.

4. The battery pack according to claim 1, **characterized in that** a second adhesive storage recess (304) configured to receive the second adhesive (402) is formed on a side surface of at least one of the plurality of pressure strips (30) facing the battery cells (60);
optionally, wherein the second adhesive storage recess (304) on each of the at least one pressure strip extends through the side surface of the pressure strip (30) along a length direction thereof.

5. The battery pack according to claim 1, **characterized in that** the first adhesive (401) is made of silica gel, butyl glue, epoxy resin, polyurethane glue or polyimide glue; and/or
wherein the second adhesive (402) is made of silica gel, butyl glue, epoxy resin, polyurethane glue or polyimide glue.

6. The battery pack according to claim 1, **characterized in that** the casing body (20) further comprises a plurality of reinforcement members (203) spaced apart in the accommodating cavity (2011), and the plurality of reinforcement members (203) are connected to the casing shell (201);
wherein the battery pack further comprises one or more gap adjustment assemblies (50), each connected to a corresponding one of the plurality of pressure strips (30) and a corresponding one of the plurality of reinforcement members (203), and configured to adjust a distance between the pressure strip (30) and the battery cells (60).

7. The battery pack according to claim 6, **characterized in that** the plurality of reinforcement members (203) are connected to the casing shell (201) by threaded connection, riveting, welding or bonding.

8. The battery pack according to claim 6, **characterized in that** the pressure strip (30) is connected with more than one of the gap adjustment assemblies (50) spaced apart along a length direction of the pressure strip (30).

9. The battery pack according to claim 6, **characterized in that** the gap adjustment assembly (50) comprises:
a screw sleeve (502) arranged on the reinforcement member (203), and
a bolt (501) extends through the pressure strip (30) to be threadedly connected with the screw sleeve (502);
wherein the screw sleeve (502) comprises a threaded part (5021) and a limiting part (5022) that are connected to each other, wherein the threaded part (5021) is arranged in the reinforcement member (203) and is threadedly connected to the bolt (501), and the limiting part (5022) is arranged between the pressure strip (30) and the reinforcement member (203) to adjust the distance between the pressure strip (30) and the battery cells (60).

10. The battery pack according to claim 9, **characterized in that** the threaded part (5021) is a cylindrical shell or a polygonal shell;
wherein the limiting part (5022) has a ring shape or a polygonal shape.

11. The battery pack according to claim 9, **characterized in that** an avoidance recess (50213) is formed at an end of the threaded part (5021) closer to the pressure strip (30), a threaded structure (50212) matching with the bolt (501) is formed at an end of the threaded part (5021) farther from the pressure strip (30);
wherein the bolt (501) is arranged apart from a wall of the avoidance recess (50213).

12. The battery pack according to claim 9, **characterized in that** an anti-slip structure (50211) connected to the reinforcement member (203) is formed on an outer wall of the threaded part (5021);
optionally, wherein the anti-slip structure (50211) is formed as a plurality of protrusions surrounding the threaded part (5021) and arranged at intervals, and the plurality of protrusions have a strip-shape and are arranged along an axial direction of the threaded part (5021).

13. The battery pack according to claim 9, **characterized in that** a clearance slot (302) is formed in the pressure strip (30), and an end of the bolt (501) farther from the threaded part (5021) is located inside the clearance recess.

14. The battery pack according to claim 9, **characterized in that** a through hole (303) is formed in the pressure strip (30), and the bolt (501) extends through the through hole (303);
wherein a skirt (5011) is provided on an outer wall of the bolt (501), and the skirt (5011) has a diameter larger than a head of the bolt (501) and covers the through hole (303).

15. The battery pack according to claim 6, **characterized in that** the plurality of reinforcement members (203) are arranged to be parallel to each other to divide the accommodating cavity (2011) into a plurality of parallel installation spaces (2012) configured to receive the battery cells (60), and the plurality of pressure strips (30) are arranged to be perpendicular to the plurality of reinforcement members (203);
optionally, wherein the plurality of installation spaces (2012) are arranged along a direction perpendicular to an extension direction of the plurality of reinforcement members (203).
